# FASCICULE DE BREVET EUROPEEN

(11) **EP 1 163 119 B1**
(45) Date de publication et mention de la délivrance du brevet: **19.03.2003**
(21) Numéro de dépôt: 00915156.4
(22) Date de dépôt: 28.02.2000
(51) Int. Cl.: B60C 9/20

(54) **PNEUMATIQUE POUR ENGIN LOURD**
LUFTREIFEN FÜR SCHWERES GERÄT
TYRE FOR HEAVY VEHICLE

(30) Priorité: 17.03.1999 FR 9903416
(43) Date de publication de la demande: 19.12.2001
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: COMPS, Olivier, F-63000 Clermont-Ferrand (FR); GIRAUD, Jacques, F-63110 Beaumont (FR); PALGEN, Marie-Claude, F-63200 Riom (FR)
(74) Mandataire: Diernaz, Christian
(86) Numéro de dépôt international: EP0001669
(87) Numéro de publication internationale: WO00054992

(56) Documents cités:
- EP-A- 0 600 398
- EP-A- 0 858 914
- DE-A- 3 327 670
- US-A- 4 258 775

## Description

L'invention concerne un pneumatique à armature de carcasse radiale destiné à équiper un véhicule lourd tel qu'un véhicule de transport ou un engin de "Génie Civil". Elle concerne plus particulièrement l'armature de sommet d'un tel pneumatique.

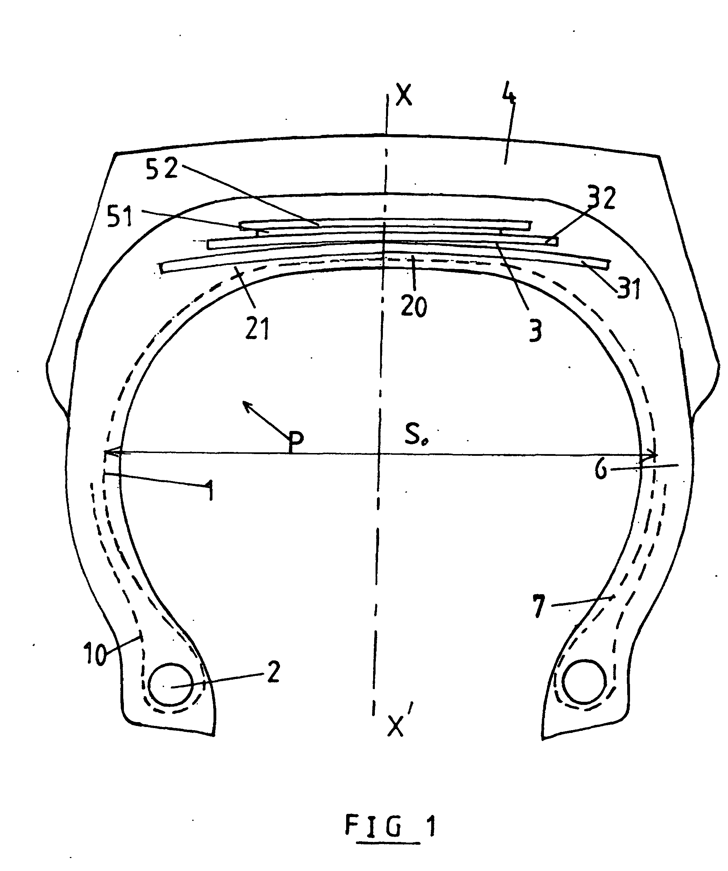

Le pneumatique de Génie Civil, montré sur la figure 1 comprend, comme connu en soi, une armature de carcasse 1 composée d'une seule nappe de câbles métalliques inextensibles en acier, ancrée dans chaque bourrelet à une tringle 2 pour former un retournement 10 dont l'extrémité est sensiblement située au niveau de la plus grande largeur axiale d'armature de carcasse. Ladite armature de carcasse est surmontée radialement de couche 20 et de profilés 21 de mélange caoutchouteux, puis d'une armature de sommet 3, composée d'une part de deux nappes 31 et 32 dites de travail et d'autre part radialement de deux nappes 51 et 52 dites de protection. Les nappes de travail sont constituées de câbles métalliques inextensibles en acier, parallèles entre eux dans chaque nappe 31, 32 et croisés d'une nappe 31 à la suivante 32 en faisant avec la direction circonférentielle des angles pouvant être compris entre 15° et 45°. Les largeurs axiales des dites nappes de travail sont généralement comprises entre 60% et 80% de la largeur axiale maximale d'armature de carcasse 1. Les nappes de protection 51, 52 sont généralement constituées de câbles métalliques en acier élastiques, parallèles entre eux dans chaque nappe 51, 52 et croisés d'une nappe 51 à la suivante 52 en faisant aussi des angles pouvant être compris entre 15° et 45°. Les largeurs des dites nappes de protection 51, 52 sont usuellement inférieures à la largeur de la nappe de travail la plus large. Enfin, les câbles de la nappe de travail radialement extérieure 32 sont usuellement croisés avec les câbles de la nappe de protection 51 radialement intérieure. L'armature de sommet est surmontée elle-même d'une bande de roulement 4 qui est réunie aux deux bourrelets 7 par les deux flancs 6.
Comme connu, les armatures de sommet de pneumatiques radiaux, et plus particulièrement les pneumatiques de grandes dimensions, sont soumises à de grandes déformations, qui engendrent entre les bords de deux nappes croisées des contraintes de cisaillement longitudinal et transversal (le cisaillement longitudinal est plus important que le transversal lorsque les câbles de nappes croisées font avec la direction circonférentielle des angles faibles), en même temps qu'une contrainte de délamination, contrainte radiale ayant tendance à séparer radialement les bords des deux nappes. Les dites contraintes sont dues en premier lieu à la pression de gonflage du pneumatique, qui fait en sorte que la pression dite de ceinturage entre armature de carcasse et armature de sommet tend à provoquer l'expansion circonférentielle de ladite armature de sommet ; sont ensuite dues à la charge portée par le pneumatique en roulage avec naissance d'une surface de contact entre sol et pneumatique ; puis enfin à la mise en dérive du pneumatique en roulage. Les dites contraintes de cisaillement génèrent des fissures dans le mélange caoutchouteux avoisinant l'extrémité de la nappe la plus courte, fissures qui se propagent dans ledit mélange et qui pénalisent l'endurance d'une armature de sommet, et donc du pneumatique.

Une amélioration nette de l'endurance a été procurée par l'emploi dans l'armature de sommet d'au moins une nappe de sommet de protection ayant une largeur axiale supérieure à la largeur de la nappe de travail la plus large axialement.

Une autre solution, comme constaté dans le brevet FR 2 421 742, consiste à répartir plus favorablement les contraintes génératrices de séparation entre nappes de sommet de travail, consécutives à la mise en dérive du pneumatique, en multipliant le nombre des nappes de travail, par exemple en utilisant quatre nappes de travail d'éléments de renforcement croisés d'une nappe à la suivante en formant avec la direction circonférentielle des angles pouvant être compris entre 15° et 35° et en répartissant les éléments de renforcement utilisés dans les deux nappes de travail usuelles sur les quatre nappes de travail de façon que ces dernières aient chacune même épaisseur et même rigidité à l'extension mesurée perpendiculairement aux éléments de renforcement de la nappe.

La multiplication des nappes de travail n'est pas sans inconvénients, particulièrement au centre de l'armature où le nombre de nappes influe très fortement sur les rigidités de flexion du sommet de pneumatique. L'invention se propose d'augmenter la résistance à la séparation entre nappes de travail d'une armature de sommet à nappe(s) de protection élargie(s) et ainsi d'améliorer l'endurance d'une telle armature de sommet de pneumatique pour engins de Génie Civil, sans augmenter le nombre de nappes de travail au centre de l'armature.

Le pneumatique, conforme à l'invention, comprenant au moins une armature de carcasse radiale ancrée dans chaque bourrelet à au moins une tringle en formant un retournement, ladite armature étant surmontée radialement à l'extérieur par une armature de sommet composée d'au moins trois nappes dites de travail et formées d'éléments de renforcement métalliques inextensibles, parallèles entre eux dans chaque nappe et croisés d'une nappe à la suivante en faisant avec la direction circonférentielle des angles α, α' compris entre 15° et 35°, est caractérisé en ce qu'au moins une demi-nappe, composée d'éléments de renforcement métalliques inextensibles et de largeur L' est, de chaque côté du plan équatorial, disposée radialement entre les bords d'au moins deux nappes de travail radialement adjacentes, les extrémités axialement extérieure et intérieure de ladite demi-nappe étant situées, respectivement axialement à l'extérieur de l'extrémité de la nappe de travail la plus large et axialement à l'intérieur de l'extrémité de la nappe de travail la moins large, à des distances au moins égales à la quantité L'/5, les éléments de renforcement de ladite demi-nappe faisant avec la direction circonférentielle un angle β, d'une part supérieur en valeur absolue à 25°, et d'autre part supérieur en valeur absolue au plus grand angle que font les éléments des deux nappes de travail d'une quantité comprise entre 5° et 15°.

Préférentiellement, une demi-nappe est disposée entre les deux nappes de travail les plus proches de l'armature de carcasse. Qu'il y ait une ou deux demi-nappes, les éléments de renforcement de chaque demi-nappe sont avantageusement croisés avec les éléments de renforcement de la nappe de travail radialement à l'intérieur de ladite demi-nappe et la plus proche radialement de l'armature de carcasse.

Les largeurs de nappes de travail de l'armature de sommet, généralement inégales, sont telles que la nappe de travail radialement à l'intérieur de chaque demi-nappe, est moins large que la nappe radialement à l'extérieur de ladite demi-nappe.

Dans le cas de la présence, de chaque côté du plan équatorial, de deux demi-nappes disposées entre les bords de deux nappes de travail radialement adjacentes de l'armature de travail de trois nappes, la deuxième demi-nappe est formée des mêmes éléments de renforcement métalliques que ceux de 1a première demi-nappe, lesdits éléments étant préférentiellement croisés avec les éléments de ladite première demi-nappe.

L'armature de travail est, comme connu en soi, surmontée radialement d'une armature de protection composée de deux nappes d'éléments de renforcement métalliques élastiques. L'une des dites nappes de protection, préférentiellement la nappe radialement intérieure a une largeur axiale plus grande que la plus grande largeur axiale des nappes de travail, alors que la largeur de la deuxième nappe de protection a une largeur de valeur comprise entre les valeurs des largeurs de nappes de travail.

Les caractéristiques de l'invention seront mieux comprises à l'aide de la description qui suit et qui se réfère au dessin, illustrant à titre non limitatif des exemples d'exécution, et sur lequel :
- la figure 1 représente schématiquement, vue en section méridienne, une armature de sommet pour un pneumatique de Génie Civil, selon l'état de la technique antérieure,
- la figure 2 représente schématiquement, vue en section méridienne, une première variante d'armature de sommet, conforme à l'invention,
- la figure 3 représente schématiquement, toujours vue en section méridienne, une deuxième variante d'armature de sommet conforme à l'invention.

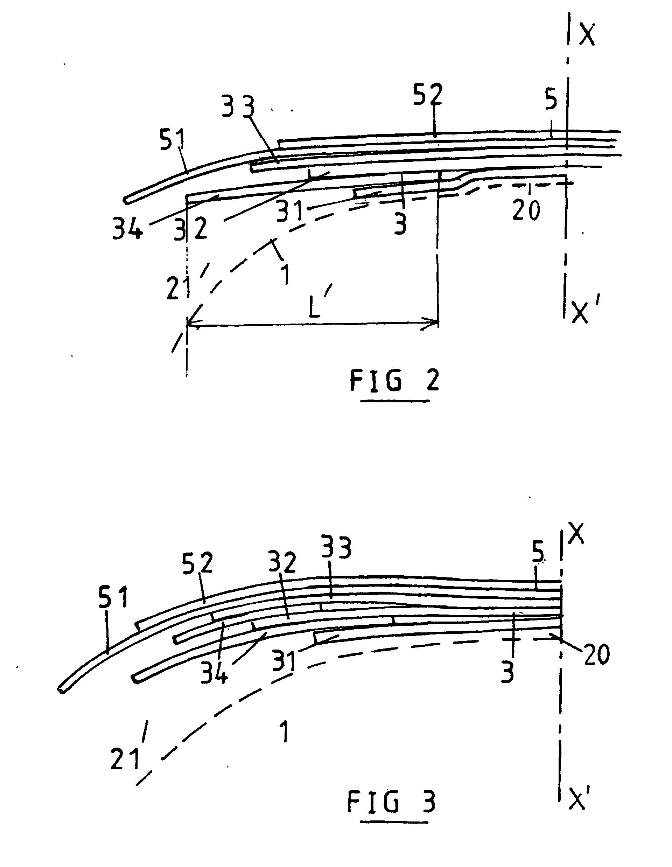

Le pneumatique P, conforme à l'invention, et dont l'armature de sommet est montrée sur la figure 2, est un pneumatique pour engin de Génie Civil. De grande dimension, le rapport de forme H/S dudit pneumatique est égal à 0,80, H étant la hauteur du pneumatique sur jante et S la largeur axiale maximale du pneumatique, lorsque ce dernier est monté sur sa jante de service et gonflé à sa pression recommandée.

Ledit pneumatique P comprend une armature de carcasse radiale composée d'une seule nappe 1 de câbles métalliques inextensibles, ancrée dans chaque bourrelet à au moins une tringle (non montrée) pour former un retournement dont l'extrémité est sensiblement située sur la droite de plus grande largeur axiale d'armature de carcasse, droite parallèle à l'axe de rotation. La nappe de carcasse 1 est surmontée radialement, dans sa partie centrale d'une couche 20 de mélange de caoutchouteux et dans ses parties latérales de deux profilés 21 de forme triangulaire constitués du même mélange caoutchouteux, lesdits profilés permettant de compenser les différences de courbure méridienne entre armature de carcasse et armature de sommet. En effet, radialement à l'extérieur des dite couche et profilés, est disposée une armature de sommet de travail 3 et une armature de protection 5.

L'armature de travail, montrée sur la figure 2 et conforme à l'invention, comprend en premier lieu trois nappes de travail 31, 32 et 33, axialement continues et respectivement de largeurs L₃₁, L₃₂, et L₃₃, la nappe la moins large 31 étant, dans le cas décrit, radialement la plus proche de l'armature de carcasse 1 et les largeurs L₃₁, L₃₂ et L₃₃ étant croissantes en allant radialement de l'intérieur à l'extérieur. Les dites trois largeurs sont respectivement égales à 0,5 S₀, 0,55 S₀ et 0,66 S₀, S₀ étant la largeur axiale maximale de l'armature de carcasse. Lesdites trois nappes 31, 32 et 33 sont formés de câbles métalliques inextensibles, parallèles entre eux dans chaque nappe et croisés d'une nappe 31, 32 à la suivante 32, 33 en faisant avec la direction circonférentielle du pneumatique des angles α₁, α₂ et α₃ respectivement égaux à + 18°, - 24° et + 18°.

Radialement entre les bords de la nappe 31 la moins large et les bords de la nappe 32 radialement adjacente et de largeur intermédiaire sont disposées deux demi-nappes 34, formées des mêmes éléments métalliques inextensibles que ceux qui forment les nappes 31, 32 et 33, lesdits éléments étant parallèles entre eux dans chaque demi-nappe 34 et croisés avec les éléments de la nappe axialement continue 31 la plus proche de la nappe de carcasse 1, en faisant avec la direction circonférentielle un angle β, supérieur aux angles α₁ et α₂ et égal à - 33°. La largeur axiale L' de chaque demi-nappe 34 est égale à 0,33 S₀. L'extrémité axialement intérieure de la demi-nappe 34 est située axialement à l'intérieur de l'extrémité de la nappe 31 et à une distance axiale du plan équatorial XX', telle que la différence entre la demi-largeur axiale de la nappe de travail la moins large 31 et ladite distance soit égale à 0,22 L', de sorte qu'il y ait recouvrement entre le bord axialement intérieur de ladite demi-nappe 34 et le bord de la nappe axialement continue 31, la moins large et radialement à l'intérieur. Quant à l'extrémité axialement extérieure de la demi-nappe 34, elle est axialement à l'extérieur de l'extrémité de la nappe la plus large 32 et à une distance axiale du plan équatorial XX', telle que la différence entre ladite distance et la demi-largeur axiale de la nappe de travail la plus large 32 soit égale à 0,37 L'.

L'armature de protection, qui complète l'armature de sommet et radialement à l'extérieur de l'armature de travail décrite ci-dessus, est formée de deux nappes 51 et 52 de câbles en acier élastiques. Sont dits élastiques des câbles présentant sous une force de traction égale à la charge de rupture un allongement relatif au moins égal à 4%, alors que des câbles sont dits inextensibles lorsque leur allongement relatif, mesuré pour 10% de la force de rupture, est inférieur à 0,2%. Les câbles desdites deux nappes sont croisés d'une nappe 51 à la suivante 52 en faisant avec la direction circonférentielle des angles respectivement égaux à - 24° et + 24°, les câbles de la nappe de protection 51 la plus proche de l'armature de carcasse étant croisés avec les câbles de la nappe de travail 33 la plus éloignée de ladite armature de carcasse. La largeur axiale L₅₁ de la nappe 51 est très supérieure à la largeur L₃₃ de la nappe de travail la plus large, et son extrémité est axialement à l'extérieur de l'extrémité axialement extérieure de la demi-nappe 34, de sorte que ladite nappe de protection 51 recouvre axialement la totalité des nappes de travail et demi-nappes intercalées. La largeur L₅₂ de la deuxième nappe de protection est sensiblement égale à la demi-somme des largeurs L₃₂ et L₃₃ des deux nappes de travail les plus larges.

Sur la figure 3, est montrée une variante d'armature de sommet comprenant deux demi-nappes 34 respectivement situées entre les nappes de travail 31 et 32 et entre les nappes de travail 32 et 33, lesdites nappes de travail 31, 32, 33 étant en tous points identiques aux nappes décrites ci-dessus. Il en est de même de la première demi-nappe (34) par rapport à la demi-nappe de la figure 2. Quant à la deuxième demi-nappe 34, entre les nappes de travail 32 et 33, elle est constituée de câbles identiques à ceux de la première demi-nappe et faisant avec la direction circonférentielle un angle β égal à 33°, mais croisés avec les câbles de la première demi-nappe 34. Quant à sa largeur axiale, elle obéit aux principes énoncés ci-dessus, en prenant, comme connu en soi, la précaution de ne pas avoir deux extrémités de nappe dans le même plan parallèle.

## Revendications

1. Pneumatique pour engin lourd, comprenant au moins une armature de carcasse radiale (1), ancrée dans chaque bourrelet à au moins une tringle en formant un retournement, ladite armature (1) étant surmontée radialement à l'extérieur par une armature de sommet (3) composée d'au moins trois nappes (31, 32, 33) dites de travail et formées d'éléments de renforcement métalliques inextensibles, parallèles entre eux dans chaque nappe et croisés d'une nappe (31, 32) à la suivante (32, 33) en faisant avec la direction circonférentielle des angles α, α₁, α₂ compris entre 15° et 35°, **caractérisé en ce qu'**au moins une demi-nappe (34), composée d'éléments de renforcement métalliques inextensibles et de largeur L', est, de chaque côté du plan équatorial XX', disposée radialement entre les bords d'au moins deux nappes de travail (31, 32 ; 32, 33) radialement adjacentes, les extrémités axialement extérieure et intérieure de ladite demi-nappe (34) étant situées, respectivement axialement à l'extérieur de l'extrémité de la nappe de travail la plus large et axialement à l'intérieur de l'extrémité de la nappe de travail la moins large, à des distances au moins égales à la quantité L'/5, les éléments de renforcement de ladite demi-nappe (34) faisant avec la direction circonférentielle un angle β, d'une part supérieur en valeur absolue à 25°, et d'autre part supérieur en valeur absolue au plus grand angle que font les éléments des deux nappes de travail d'une quantité comprise entre 5° et 15°.

2. Pneumatique selon la revendication 1, **caractérisé en ce qu'**une demi-nappe (34) est disposée entre les deux nappes de travail les plus proches (31, 32) de l'armature de carcasse (1).

3. Pneumatique selon l'une des revendications 1 ou 2, **caractérisé en ce que** les éléments de renforcement de chaque demi-nappe (34) sont croisés avec les éléments de renforcement de la nappe de travail(31,32) radialement à l'intérieur de ladite demi-nappe (34) et la plus proche radialement de l'armature de carcasse (1).

4. Pneumatique selon la revendication 3, **caractérisé en ce que** les largeurs de nappe de travail (31, 32, 33) de l'armature de sommet (3) sont telles que la nappe (31, 32) radialement à l'intérieur de chaque demi-nappe (34) est moins large que la nappe (32, 33) radialement à l'extérieur de ladite demi-nappe (34).

5. Pneumatique selon la revendication 4, **caractérisé en ce que**, dans le cas de la présence, de chaque côté du plan équatorial XX', de deux demi-nappes (34) disposées entre les bords de deux nappes de travail (31, 32 ; 32, 33) radialement adjacentes de l'armature de travail de trois nappes(31, 32, 33), la deuxième demi-nappe (34) est formée des mêmes éléments de renforcement métalliques que ceux de la première demi-nappe (34), lesdits éléments de la deuxième demi-nappe étant croisés avec les éléments de ladite première demi-nappe.

6. Pneumatique selon l'une des revendications 1 à 5, **caractérisé en ce que** l'armature de travail (31,32,33,34) est surmontée radialement d'une armature de protection (5) composée de deux nappes (51, 52) d'éléments de renforcement métalliques élastiques, l'une des dites nappes de protection (51, 52) ayant une largeur axiale L₅₁ (L₅₂) plus grande que la plus grande largeur axiale des nappes de travail.

7. Pneumatique selon la revendication 6, **caractérisé en ce que** la nappe (51, 52), ayant une largeur axiale L₅₁ (L₅₂) plus grande que la plus grande largeur axiale des nappes de travail, est la nappe de protection radialement intérieure (51), alors que la largeur de la deuxième nappe de protection (52) a une largeur L₅₂ comprise entre les deux plus grandes largeurs de nappes de travail.

## Patentansprüche

1. Reifen für schweres Gerät, der mindestens eine radiale Karkassenbewehrung (1) aufweist, die in jedem Wulst an mindestens einem Wulstkern unter Bildung eines Umschlags verankert ist, wobei radial über der genannten Bewehrung (1) auf der Außenseite eine Scheitelbewehrung (3) angebracht ist, die aus mindestens drei sogenannten Arbeitslagen (31, 32, 33) zusammengesetzt ist und aus metallischen, undehnbaren Verstärkungselementen gebildet sind, die untereinander in jeder Lage undehnbar sind und von einer Lage (31, 32) zur folgenden (32, 33) überkreuz liegen, wobei sie zur Umfangsrichtung Winkel α, α₁, α₂ bilden, die zwischen 15° und 35° liegen, **dadurch gekennzeichnet, daß** mindestens eine Halblage (34), die aus metallischen, undehnbaren Verstärkungselementen zusammengesetzt ist und L' breit ist, auf jeder Seite der Äquatorialebene XX' radial zwischen den Rändern mindestens zweier, radial nebeneinanderliegender Arbeitslagen (31, 32; 32, 33) angeordnet ist, wobei das radial innere und äußere Ende der genannten Halblage (34) axial auf der Außenseite des Endes der breitesten Arbeitslage bzw. axial auf der Innenseite des Endes der am wenigsten breiten Arbeitslage mit Abständen liegt, die mindestens das Maß L'/5 betragen, wobei die Verstärkungselemente der genannten Halblage (34) zur Umfangsrichtung einen Winkel β bilden, der einerseits im Absolutwert größer als 25° ist und andererseits im Absolutwert größer als der größte Winkel, den die Elemente der beiden Arbeitslagen bilden, ist, und zwar um einen Wert, der zwischen 5° und 15° liegt.

2. Reifen nach Anspruch 1, **dadurch gekennzeichnet, daß** eine Halblage (34) zwischen den beiden Arbeitslagen (31, 32) gelegen ist, die der Karkassenbewehrung (1) nächstgelegen sind.

3. Reifen nach einem der Ansprüche 1 oder 2, **dadurch gekennzeichnet, daß** die Verstärkungselemente einer jeden Halblage (34) überkreuz mit den Verstärkungselementen der Arbeitslage (31, 32) angeordnet sind, die radial im Inneren der genannten Halblage liegt (34) und radial der Karkassenbewehrung (1) nächstgelegen ist.

4. Reifen nach Anspruch 3, **dadurch gekennzeichnet, daß** die Breiten der Arbeitslagen (31, 32, 33) der Scheitelbewehrung (3) so sind, daß die Lage (31, 32) radial im Inneren jeder Halblage (34) weniger breit ist als die radial auf der Außenseite der genannten Halblage (34) liegende Lage (23, 33).

5. Reifen nach Anspruch 4, **dadurch gekennzeichnet, daß** im Fall der Anwesenheit zweier Halblagen (34) auf jeder Seite der Äquatorialebene XX', die zwischen den Rändern der beiden, radial benachbarten Arbeitslagen (31, 32; 32, 33) der Arbeitsbewehrung mit drei Lagen (31, 32, 33) angeordnet sind, die zweite Halblage (34) aus den selben, metallischen Verstärkungselementen gebildet ist wie die der ersten Halblage (34), wobei die genannten Elemente der zweiten Halblage mit den Elementen der genannten ersten Halblage überkreuz liegen.

6. Reifen nach einem der Ansprüche 1 bis 5, **dadurch gekennzeichnet, daß** radial über der Arbeitsbewehrung (31, 32, 33, 34) eine Schutzbewehrung (5) angebracht ist, die aus zwei Lagen (51, 52) aus elastischen, metallischen Verstärkungselementen zusammengesetzt ist, wobei die eine der genannten Schutzlagen (51, 52) eine axiale Breite L₅₁ (L₅₂) aufweist, die größer ist als die größte axiale Breite der Arbeitslagen.

7. Reifen nach Anspruch 6, **dadurch gekennzeichnet, daß** die Lage (51, 52), die eine größere axiale Breite L₅₁ (L₅₂) aufweist, als die größte axiale Breite der Arbeitslagen, die radial innere Schutzlage (51) ist, während die Breite der zweiten Schutzlage (52) eine Breite L₅₂ aufweist, die zwischen den beiden größten Breiten der Arbeitslagen liegt.

## Claims

1. A tyre for heavy equipment, comprising at least one radial carcass reinforcement (1) anchored within each bead to at least one bead wire, forming an upturn, said reinforcement (1) being surmounted radially to the outside by a crown reinforcement (3) formed of at least three so-called working plies (31, 32, 33) formed of inextensible metal reinforcement elements, which are parallel to each other within each ply and are crossed from one ply (31, 32) to the next (32, 33), forming angles α, α₂, α₃ of between 15° and 35° with the circumferential direction, **characterised in that** at least one half-ply (34), formed of inextensible metal reinforcement elements and of width L', on either side of the equatorial plane XX', is arranged radially between the edges of at least two radially adjacent working plies (31, 32; 32, 33), the axially outer and inner ends of said half-ply (34) being located, respectively axially to the outside of the end of the widest working ply and axially to the inside of the end of the least wide working ply, at distances at least equal to the amount L'/5, the reinforcement elements of said half-ply (34) forming with the circumferential direction an angle β, which is firstly greater in absolute value than 25°, and secondly is greater in absolute value than the largest angle formed by the elements of the two working plies by a quantity of between 5° and 15°.

2. A tyre according to Claim 1, **characterised in that** a half-ply (34) is arranged between the two working plies (31, 32) closest to the carcass reinforcement (1).

3. A tyre according to one of Claims 1 or 2, **characterised in that** the reinforcement elements of each half-ply (34) are crossed with the reinforcement elements of the working ply (31, 32) radially to the inside of said half-ply (34) and closest radially to the carcass reinforcement (1).

4. A tyre according to Claim 3, **characterised in that** the widths of the working plies (31, 32, 33) of the crown reinforcement (3) are such that the ply (31, 32) radially to the inside of each half-ply (34) is less wide than the ply (32, 33) radially to the outside of said half-ply (34).

5. A tyre according to Claim 4, **characterised in that** In the case of the presence, on either side of the equatorial plane XX', of two half-plies (34) arranged between the edges of two radially adjacent working plies (31, 32; 32, 33) of the working reinforcement of three plies (31, 32, 33), the second half-ply (34) is formed of the same metal reinforcement elements as those of the first half-ply (34), said elements of the second half-ply preferably being crossed with the elements of said first half-ply.

6. A tyre according to one of Claims 1 to 5, **characterised in that** the working reinforcement (31, 32, 33, 34) is surmounted radially by a protective reinforcement (5) composed of two plies (51, 52) of elastic metal reinforcement elements, one of said protective plies (51, 52) having an axial width (L₅₁, L₅₂) greater than the greatest axial width of the working plies.

7. A tyre according to Claim 6, **characterised in that** the ply (51, 52) having an axial width (L₅₁, L₅₂) greater than the greatest axial width of the working plies is the radially inner protective ply (51), whereas the width of the second protective ply (52) has a width L₅₂ which lies between the largest two widths of the working plies.
